# EUROPEAN PATENT SPECIFICATION

(11) **EP 2 159 412 B1**
(45) Date of publication and mention of the grant of the patent: **02.12.2015**
(21) Application number: 08014998.2
(22) Date of filing: 25.08.2008
(51) Int. Cl.: F03D 1/00, F03D 11/00

(54) **Flange mounting for holding a tower section**
Flanschanordnung zum Halten eines Turmabschnitts
Bride de montage pour soutenir un caisson

(43) Date of publication of application: 03.03.2010
(73) Proprietor: Siemens Aktiengesellschaft, 80333 München (DE)
(72) Inventor: Knudsen, Henrik, 8600 Silkeborg (DK); Madsen, Jonas, 6731 Tjæreborg (DK)

(56) References cited:
- EP-A- 1 813 473
- WO-A-2005/071261
- WO-A-2007/093854
- WO-A-2007/132408
- US-A1- 2004 094 965

## Description

### Field of invention

The present invention relates to a clamping device for mounting a holder element, in particular a holder element for a wind turbine element, to a support unit. Moreover, the present invention relates to a method of mounting a holder element, in particular a holder element for a wind turbine element, to a support unit.

### Art Background

For supplying world's population with electric energy, more and more regenerative energy sources are developed and established. One regenerative energy source is to provide electricity from wind power. Wind power is generated by wind turbine devices.

A wind turbine comprises for instance a wind turbine tower that extends vertically from the ground area. To the upper end of the wind turbine tower the wind turbine housing is fixed rotationally around a vertical axis. In the wind turbine housing the wind generator is housed. To the wind generator the rotor blades of the wind turbine are attached.

The tower section of the wind turbine has to be designed very high, so that the rotor blades of the wind turbine may be provided in an effective height for producing wind energy. Hence, large parts of the wind turbine tower have to be transported from the manufacturing location to the place of installation of the wind turbine. Because the wind turbine towers comprise a large size and are usually very heavy, complex and strong fixing devices for fixing the wind tower sections to a transportation unit has to be provided.

WO 2007/093854 A2 discloses a fixture for gripping an end of a member, in particular of a wind turbine tower section. The fixture may be connected to an end of a large member, such as a wind turbine blade and a wind turbine tower section. By means of a rigid bolted fastening or screwed fastening the fixture is connected to the wind tower. A bolt is thereby for instance guided through a through hole of the fixture into a therefore provided threaded hole in the wind tower section.

### Summary of the Invention

It may be an object of the present invention to provide an incomplex and flexible fixation device for fixing large elements to support units.

This object may be met by the subject-matter according to the independent claims. Advantageous embodiments of the present invention are described by the dependent claims.

According to a first exemplary embodiment of the present invention, a clamping device for mounting a holder element is defined by the features of claim 1.

According to a further exemplary embodiment of the present invention, a method of mounting a holder element, in particular a holder element for a wind turbine element, to a support unit is provided by the features of claim 12.

The term "clamping element" may comprise a plate-like material that transmits a clamping force over a holder element to the mounting element. The clamping element may be a flat plate element or an angle bracket, for instance. The clamping element may have a polygonal shape or a circular shape.

The "fixing element" may describe a screw or a bolt which transmits a clamping force between the clamping element and the mounting element. The bolt may be fixed by a screw nut or the like. Furthermore, the clamping element or the mounting element may comprise a threaded hole in which the screw may be screwed. The direction in which the fixing element is inserted may vary. I.e. the fixing element may be guided firstly through the clamping element and then to the mounting element or may be guided starting from the mounting element to the clamping element. The fixing element may further comprise elastic bands or pre-stressed ropes adapted for providing a sufficient clamping force.

The term "mounting element" may describe an adaptive plate or a base plate that may be fixed to a support unit and may be fixed to the holder element. The mounting element may be adapted for surrounding the holder element and may be customized or adapted to the shape of the support unit and/or the holder element.

By the term "a flexible fixing portion" a portion of the mounting element may be described, wherein the fixing element may be e.g. slidably connected. A flexible fixing portion according to the present invention may be for instance a slotted hole. The flexible fixing portion may describe a portion that provides a variety of possible fixing locations for the fixing element. Thus, the fixing element may be for instance adapted to certain sizes of the holder elements.

The holder elements may comprise for instance a wind turbine element, rotor blade elements or other large parts of a wind turbine device. Furthermore, by the term "holder element" also other large and heavy parts, such as tower sections of a wind turbine that comprise a diameter from 2400 mm (millimeter) to 5000 mm (Millimeter) and a weight from 40 tons to 80 tons, for instance.

The term "stiction" describes a physical characteristic of the friction, in particular a friction that tends to prevent stationary surfaces from being set in motion. This means that the clamping force between the holder element and the mounting element has to be high enough to prevent a motion between the two parts. The clamping force is provided by the fixing element that presses or clamps the clamping element in the direction to the mounting element so that the holder element is clamped between these two parts. In conventional systems a clamping system may be provided, wherein the holding element has to comprise provisions that are only used to connect a holder element to a transportation unit for instance. I.e., bore holes may have to be provided that are only be used for connecting the holder element to the transportation unit. These bore holes may have no longer functional characteristics during the use of the wind turbine. Thus, further manufacturing steps may have to be provided in order to manage the transportation from the manufacturing area to the field of installation of the wind turbine.

With the present invention, the holder element is hold during transportation by the clamping device, for instance by clamping an end part or a flange of the holder device to the mounting element. Thus, when using the clamping device, no further provisions for transportation may have to be provided to the holder element. Further boreholes in the holding element that may be used only for the transportation fixation may be needless. Furthermore, by using the clamping device as claimed, the clamping device may be used for a variety of different sized holder elements because the fixing element is adapted for being flexibly fixed to the flexible fixing portion of the mounting element. Hence, due to the fact that the holder element does not need further transportation provisions and due to the fact that the clamping device, in particular the mounting element, comprises adaptable and flexible fixing portions, an incomplex and adaptable clamping device may be provided.

Thus, a logistical afford for transporting the holder element may be reduced. Costs and transportation time may also be reduced.

Furthermore, the clamping element, such as a plate-like clamping element, may be adapted for distributing large stresses in local parts of the holder elements. Because the force flow may not only proceed through one fixing element but also may proceed through parts of the area or surface of the clamp holder elements, stress peaks in local parts may be reduced. When screwing only one fixation element to a borehole of the holder elements, it may be provided large stress peaks. By using the clamping element with a large contact area with the holder element, the stress in local parts of the holder element may be distributed over the large area of the holder element and the clamping element, such that the stress peaks may be reduced.

According to a further exemplary embodiment of the present invention, the clamping device further comprises a spacing element. The spacing element is adapted for spacing the clamping element from the mounting element and is adapted for transmitting at least a part of the clamping force to the mounting element. Thus, a better clamping force distribution may be provided. The force flow may not only be provided to the fixing element and the clamped part of the holder element between the clamping element and the mounting element but also provided by the spacing element. Clamping force distribution between the holder element, the fixing element, the clamping element and the mounting element leads to a reduction of stress and a material failure. Furthermore, the material thickness or the dimensioning of the clamping device may be reduced due to a better clamping force distribution, so that weight and transportation costs may be reduced.

According to a further exemplary embodiment the spacing element and the clamping element are formed integrally. The term "integrally" may describe that the spacing element and the clamping element are made of one piece. Thus, a better strength of the spacing element and the clamping element may be provided so that a higher clamping force may be transmitted. The integrally formed clamping element with the spacing element may provide for instance an angle bracket shape or a steel channel shape.

According to a further exemplary embodiment, the spacing element comprises a screw element. The screw element is adapted for adjusting a spacing between the clamping element and the mounting element. The screw may be used as an adjusting screw which may provide to clamp a wide range of thicknesses of the holder element. Thus, by the screw element, the clamping device may be used for a huge variety of different types of holder elements. Thus, the clamping device according to the exemplary embodiment is not restricted to one type of holder element or to one certain shape of the holder element.

According to a further exemplary embodiment of the present invention the at least one flexible fixing portion comprise a slotted hole. The slotted hole may enable to adjust the fixing element along the slotted hole, so that the fixing element may be adjusted to different sizes and shapes of the holder element. Thus, the clamping element may be used for a variety of different shaped holder elements.

According to a further exemplary embodiment of the present invention, the mounting element comprises at least one alignment element. The at least one alignment element is adapted for aligning the holder element to the mounting element. The alignment element may be rigidly fixed to the mounting element and partially enclosing the holder element, so that the holder element may be aligned to a defined position with respect to the mounting element. The alignment element may comprise a plate that protrudes from the mounting element in the direction to the holding element. Furthermore, the alignment element may be adapted to the shape of the holder element, i.e. when the holder element is the circular shape, the alignment elements may also comprise a circular shape with a respective radius. Thus, by using the alignment element, an easier positioning of the holder element to the mounting element may be provided. Furthermore, the alignment elements may improve the clamping or the fixation between the holder element and the mounting element. The alignment element may be adapted for transmitting a further clamping force from the holder element to the mounting element, wherein the further clamping force may be transmitted perpendicular to the direction of the clamping force provided by the fixing element. Thus, accelerations resulting from disruptions during transportation may be damped and absorbed by the alignment element, so that a proper fixation may be provided.

According to a further exemplary embodiment the mounting element comprises at least one support unit fixation. The at least one support unit fixation is adapted for fixing the mounting element to the support unit. Thus, the mounting element may be flexibly connected to the support unit. I.e. the mounting element may be fixed to the holder element and then in a second step the mounting element connected to the holder element may be fixed to the supporting. Furthermore, the support unit fixation may be uniformly used for a variety of different support units, i.e. the support unit may be fixed by the support unit fixation firstly to a truck and then to a ship. A disconnection of the mounting element from the holder element may not be necessary when changing the support unit. Thus, an easier and faster change between different support units may be provided.

According to a further exemplary embodiment, the mounting device comprises a base area. The base area is adapted for being mounted to a supporting area of the supporting device. The base area may define a plane and a plane direction in which the plane extends. The supporting area may define a plane that comprises a direction in which the supporting area plane extends. If the base area provides for instance the same shape as the supporting area of the supporting device, a better connection and force transmission between both elements may be provided.

According to a further exemplary embodiment, the fixing element is adapted for providing a direction of the clamping force in a parallel direction relative to the supporting area.

According to a further exemplary embodiment the fixing element is adapted for transmitting a direction of the clamping force in a perpendicular direction relative to the supporting area. Thus, when using a fixing element that is adapted for transmitting a clamping force in a perpendicular direction, also the weight of the holder itself may be added to the clamping force. I.e. the overall clamping force is the result of the clamping force generated by the fixing element and the clamping force generated by the weight of the holder element. Thus, the stiction between the holder element and the mounting element may be generated by a smaller and lighter fixation element and thus overall weight may be reduced. Furthermore, a plurality of fixing elements may be provided, wherein a part of the plurality of fixing elements transmits a direction of the clamping force in a perpendicular direction relative to the supporting area and another part of the plurality of fixing elements transmits a direction of the clamping force in a parallel direction relative to the supporting area.

According to a further exemplary embodiment, a support unit is disclosed that comprises the clamp above identified clamping device. The support unit may be a transportation unit selected from one of the group consisting of ships, railroad vehicles, trucks and airplanes.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

In the following, exemplary embodiments of the present invention will be specified to further explanation and for a better understanding with reference to the attached drawings:
Fig. 1 illustrates an exemplary embodiment of the clamping device wherein the holder element is clamped horizontally to the mounting element;
Fig. 2 illustrates a top view of an exemplary embodiment of the clamping device shown in Fig. 1;
Fig. 3 illustrates a further exemplary embodiment of the clamping device with an adjusting screw; and
Fig. 4 illustrates a further clamping device according to a further exemplary embodiment with a vertical clamping force direction perpendicular to a horizontal supporting area.

### Detailed Description

The illustration in the drawing is schematically. It is noted that in different figures, similar or identical elements are provided with the same reference signs or with reference signs, which are different from the corresponding reference signs only within the first digit.

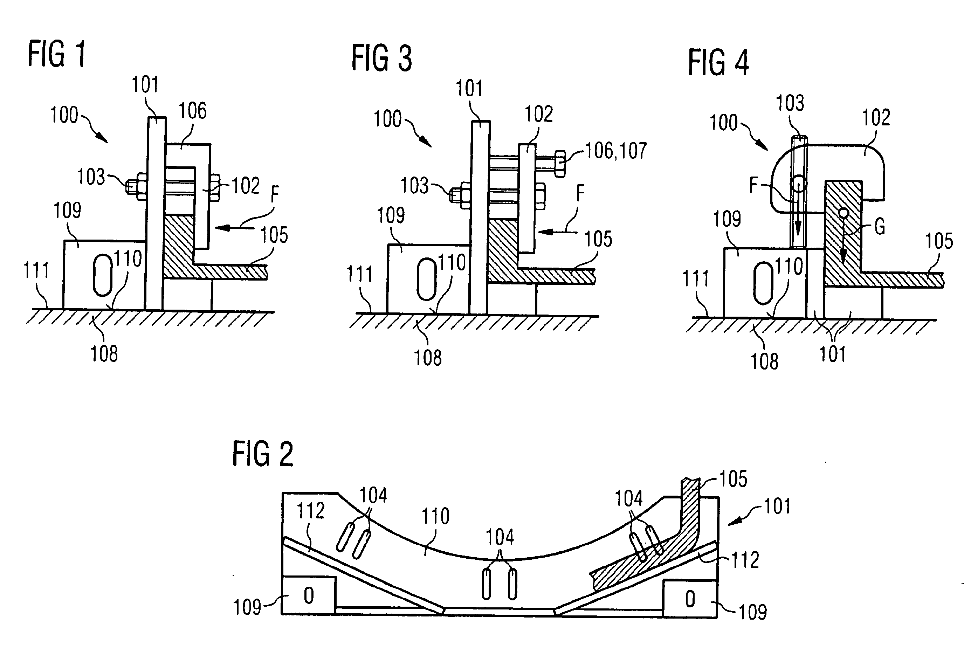

Fig. 1 illustrates a schematic view of a first exemplary embodiment of the clamping device 100.

The clamping device 100 is adapted for mounting a holder element 105, in particular a holder element 105 for a wind turbine element, to a support unit 108. The clamping device 100 comprises a clamping element 102, a fixing element 103 and a mounting element 101 with at least one fixing portion 104. The mounting element 101 is adapted to be fixed to a support unit 108. The clamping element 102 is adapted for clamping the holder element 105 to the mounting element 101. The fixing element 103 is adapted to provide a clamping force F to the clamping element 102 for providing a stiction between the holder element 105 and the mounting element 101. The fixing element 103 is adapted for being flexibly fixed to the at least one flexible fixing portion 104 of the mounting element 101.

Furthermore, Fig. 1 illustrates a spacing element 106 that is orientated perpendicular to the clamping element 102 and the mounting element 101 and spaces the clamping element 102 from the mounting element 101 in a predetermined distance. The end of the holder element 105 may form a flange, wherein a part of the flange is clamped between the clamping element 102 and the mounting element 101. The fixing element 103 is guided through the clamping element 102 and the mounting element 101 and is adapted for generating the clamping force F. The fixing element 103 may comprise a bolt that is guided through the clamping element 102 and the mounting element 101 and is fixed by a screw nut for instance. The fixing element 103 may be inserted from the direction of the clamping element 102, as shown in Fig. 1, or from the direction of the mounting element 101.

Furthermore, Fig. 1 illustrates a support unit 108, which may be for instance a truck or a ship that comprises a supporting area 111. To the supporting area 111, the base area 110 of the mounting element 101 may be placed. The connection between the mounting element 101 and the support unit 108 may be provided by support unit fixations 109.

As can be seen from Fig. 1, the clamping force F, generated by the fixation element 103, provides a parallel direction with respect to the plane of the base area 110 and the supporting area 111.

Thus, also the fixation element 103 may be provided parallel to the support unit 108, so that a better accessibility to the fixation element 108 may be provided, depending on the shape of the holder element 105 or the support unit 108.

Furthermore, Fig. 1 shows a clamping device 100 that clamps the holder element 105 to the mounting element 101 horizontally to a support unit 108. If a horizontal acceleration of the holder element 105 will appear, a tension in the fixation element 103 and a compression in the clamping element 102 may be generated. The compression and tension load or the pressure will be distributed between the clamping device 102 and the mounting element 101 or a large area.

The clamping device 102 may be fitted with two fixation elements 103. Furthermore, the holder element 105 may be clamped with a plurality of clamping elements 102, for instance eight clamping elements 102 or 3 to 5 clamping devices 102 to the mounting element 101. Each clamping element 102 may be fixed by at least one or a plurality of fixing elements 103.

Fig. 2 illustrates a top view of the mounting element 101. The mounting elements 101 comprise flexible fixing portions 104 which may comprise slotted holes as shown in Fig. 2. Furthermore, Fig. 2 illustrates alignment elements 112 to which the holder element 105 may be placed and aligned. If the holder element 105 is placed to the alignment elements 112, fixation elements 103 may be connected to the mounting element 101 and providing a clamping force F between a clamping element 102 (not shown in Fig. 2) and the mounting element 101. A clamping element 102 may aligned in a parallel direction with respect to the base area 110.

As can be seen from Fig. 2, the fixing element 103 may be slidably connected by the slotted holes while fixing the holder element 105 to the mounting element 101. If the holder element 105 comprises a smaller or larger thickness, the fixing elements 103 may be adjusted in the flexible fixing portions 104, so that the clamping device 100 may be used for different kinds of holder elements 105. Furthermore, Fig. 2 shows support unit fixations 109, with which the mounting element 101 may be connected to the support unit 108.

Fig. 3 shows an exemplary embodiment of the clamping device 100 that is similar to the exemplary embodiment shown in Fig. 1. The exemplary embodiment shown in Fig. 3 differs from that shown in Fig. 1 by the screw elements 107 that is used as spacing elements 106. By using an adjustable screw 107 as spacing element 106, a certain thickness of the holder element 105 may be adjusted, so that the clamping device 100 may be adjusted to a variety of different holder devices 105 so that the general clamping device 100 is more flexible. By using spacing elements 106 as used in the Fig. 1 and 3, a better clamping force distribution may be provided.

Fig. 4 shows an exemplary embodiment of the clamping device 100, wherein the fixing element 103 is adapted for providing a direction of the clamping force F in a perpendicular direction to the supporting area 111 or the base area 110. Thus, the clamping force F is provided by the clamping force F induced by the fixation element 103 and furthermore by the weight G of the holder element 105, in case the support area 111 or the base area are provided horizontal. Thus, a higher clamping force F may be provided for providing a stiction between the holder element 105 and the mounting element 101. In the embodiment shown in Fig. 4, the clamping element 102 may comprise a steel channel shape that envelops an end of the holder element 105. Thus, the clamping element 102 may also transmit acceleration forces with a direction perpendicular to the direction of the clamping force F. Thus, an improved clamping of the holder device 105 may be provided. The holder element 105 may be clamped vertically to the mounting element 101 and/or to the support unit 108 and the clamping element 102 may be laterally hooked on the end of the holder element 105. The sum of the pretension of the clamping element 102 and the weight G of the holder element 105 generates the general friction, in particular the stiction that prevents the holder element 105 from sliding in horizontal or vertical direction.

Summarizing, the aim of the present invention is to create an all around holder element clamping device 100 that can be used for a variety of different diameters and sizes of a variety of holder elements 105 or flange thicknesses. Furthermore, a connection between the holder elements 105 and the mounting elements 101 is provided that is flexible and similarly strong. By using a clamping connection between the holder element 105 and the mounting element 101, not only a strong but also a flexible clamping device 100 may be provided. A special design for a large number of many different clamping elements 102, fixation elements 103 or bolts may not longer necessary for handling a wide range of different holder elements 105, such as tower sections of a wind turbine. Generally, the clamping device 100 may provide a mounting element 101 that comprises flexibly fixing portions 104 such as slotted holes, for instance. To the slotted holes slidable bolts as fixation elements 103 may be provided. The mounting elements 101 may provide for instance a plurality of flexible fixing portions 104, such as through slotted holes and through holes in which the fixation element 103 such as a bolt or other locking means may be slidably arranged. The holder elements 105 may rest on one or more alignment elements 112 which are connected to the mounting element 101. The holder elements 105 may comprise a flange which is clamped against the mounting element 101 by a clamping element 102. The clamping element 102 may comprise a through hole for a fixation element 103, such as a bolt that is fixed by a locking nut on the other side of the mounting element 101. To ensure a better clamping force F on the holder element 105 a spacing element 106 or a screw element 107 may be applied to the clamping element 102. The screw element 107 may be therefore screwed through a hole in the clamping element 102 against the backside of the mounting element 101. The mounting 101 may also comprise two or more support unit fixations 109 with connecting holes for connecting the mounting element 101 to a frame or to connection means on a support unit 108 such as a transportation unit like a ship, train, truck or the like.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A clamping device for mounting a holder element (105), in particular a holder element (105) for a wind turbine element, to a support unit (108), the clamping device (100) comprising:
a clamping element (102);
a fixing element (103); and
a mounting element (101) with at least one flexible fixing portion (104);
wherein the mounting element (101) is adapted to be fixed to the support unit (108);
wherein the clamping element (102) is adapted for clamping the holder element (105) to the mounting element (101);
wherein the fixing element (103) is guided through the clamping element (102) and the mounting element (101),
wherein the fixing element (103) is adapted for providing a clamping force by pressing the clamping element (102) in the direction to the mounting element (101), so that the holder element (105) is clamped between the clamping element (102) and the mounting element (101), so that a stiction between the holder element (105) and the mounting element (101) is provided; and
wherein the fixing element (103) is adapted for being flexibly fixed to the at least one flexible fixing portion (104) of the mounting element (101).

2. The clamping device of claim 1, further comprising:
a spacing element (106);
wherein the spacing element (106) is adapted for spacing the clamping element (102) from the mounting element (101) and the spacing element (106) is adapted for transmitting at least a part of the clamping force to the mounting element (101).

3. The clamping device of claim 2;
wherein the spacing element (106) and the clamping element (102) are formed integrally.

4. The clamping device of claim 2;
wherein the spacing element (106) comprise a screw element;
wherein the screw element is adapted for adjusting a spacing between the clamping element (102) and the mounting element (101).

5. The clamping device of one of claims 1 to 4;
wherein the at least one flexible fixing portion (104) comprise a slotted hole.

6. The clamping device of one of claims 1 to 5;
wherein the mounting element (101) comprises at least one alignment element (112);
wherein the at least one alignment element (112) is adapted for aligning the holder element (105) to the mounting element (101).

7. The clamping device of one of claims 1 to 6;
wherein the mounting element (101) comprises at least one support unit fixation (109);
wherein the at least one support unit fixation (109) is adapted for fixing the mounting element (101) to the support unit (108).

8. The clamping device of one of claims 1 to 7;
wherein the mounting device (101) comprises a base area (110);
wherein the base area (110) is adapted for being mounted to a supporting area (111) of the support unit (108).

9. The clamping device of claim 8;
wherein the fixing element (103) is adapted for transmitting a direction of the clamping force in a parallel direction relative to the supporting area (111).

10. The clamping device of claim 8 or 9;
wherein the fixing element (103) is adapted for transmitting a direction of the clamping force in a perpendicular direction relative to the supporting area (111).

11. A support unit comprising the clamping device (100) according to one of the claims 1 to 10;
wherein the support unit (108) is a transportation unit selected from one of the group consisting of ships, railroad vehicles, trucks and airplanes.

12. Method of mounting a holder element (105), in particular a holder element (105) for a wind turbine element, to a support unit (108), the method comprising:
fixing a mounting element (101) to a support unit (108);
clamping the holder element (105) to the mounting element (101) by a clamping element (102);
providing a clamping force to the clamping element (102) by a fixing element.(103) that is guided through the clamping element (102) and the mounting element (101);
providing the clamping force by pressing the clamping element (102) in the direction to the mounting element (101), so that the holder element (105) is clamped between the clamping element (102) and the mounting element (101); and
flexibly fixing the fixing element (103) to at least one flexible fixing portion (104) on the mounting element (101).

## Patentansprüche

1. Klemmvorrichtung zum Befestigen eines Halteelements (105), insbesondere eines Halteelements (105) für ein Windturbinenelement, an einer Trägereinheit (108), wobei die Klemmvorrichtung (100) Folgendes umfasst:
ein Klemmelement (102),
ein Fixierelement (103) und
ein Befestigungselement (101) mit mindestens einem flexiblen Fixierabschnitt (104),
wobei das Befestigungselement (101) so ausgelegt ist, dass es sich an der Trägereinheit (108) fixieren lässt,
wobei das Klemmelement (102) zum Festklemmen des Halteelements (105) am Befestigungselement (101) ausgelegt ist,
wobei das Fixierelement (103) durch das Klemmelement (102) und das Befestigungselement (101) geführt ist,
wobei das Fixierelement (103) zum Bereitstellen einer Klemmkraft durch derartiges Drücken des Klemmelements (102) in Richtung des Befestigungselements (101) ausgelegt ist, dass das Halteelement (105) zwischen das Klemmelement (102) und das Befestigungselement (101) geklemmt wird, so dass eine Haftreibung zwischen dem Halteelement (105) und dem Befestigungselement (101) bereitgestellt wird, und
wobei das Fixierelement (103) so ausgelegt ist, dass es sich flexibel an dem mindestens einen flexiblen Fixierabschnitt (104) des Befestigungselements (101) fixieren lässt.

2. Klemmvorrichtung nach Anspruch 1, die ferner Folgendes umfasst:
ein Abstandhalteelement (106),
wobei das Abstandhalteelement (106) so ausgelegt ist, dass es das Klemmelement (102) in einem Abstand zu dem Befestigungselement (101) hält, und das Abstandhalteelement (106) so ausgelegt ist, dass es zumindest einen Teil der Klemmkraft auf das Befestigungselement (101) überträgt.

3. Klemmvorrichtung nach Anspruch 2,
bei der das Anstandhalteelement (106) und das Klemmelement (102) einstückig ausgebildet sind.

4. Klemmvorrichtung nach Anspruch 2,
bei der das Abstandhalteelement (106) ein Schraubenelement umfasst,
wobei das Schraubenelement zum Anpassen eines Abstands zwischen dem Klemmelement (102) und dem Befestigungselement (101) ausgelegt ist.

5. Klemmvorrichtung nach einem der Ansprüche 1 bis 4,
bei der der mindestens eine flexible Fixierabschnitt (104) ein Langloch umfasst.

6. Klemmvorrichtung nach einem der Ansprüche 1 bis 5,
bei der das Befestigungselement (101) mindestens ein Ausrichtelement (112) umfasst,
wobei das mindestens eine Ausrichtelement (112) zum Ausrichten des Halteelements (105) am Befestigungselement (101) ausgelegt ist.

7. Klemmvorrichtung nach einem der Ansprüche 1 bis 6,
bei der das Befestigungselement (101) mindestens eine Trägereinheitfixierung (109) umfasst,
wobei die mindestens eine Trägereinheitfixierung (109) zum Fixieren des Befestigungselements (101) an der Trägereinheit (108) ausgelegt ist.

8. Klemmvorrichtung nach einem der Ansprüche 1 bis 7,
bei der die Befestigungsvorrichtung (101) eine Grundfläche (110) umfasst,
wobei die Grundfläche (110) zum Befestigen an einer Trägerfläche (111) der Trägereinheit (108) ausgelegt ist.

9. Klemmvorrichtung nach Anspruch 8,
bei der das Fixierelement (103) zum Übertragen einer Richtung der Klemmkraft in paralleler Richtung in Bezug zur Trägerfläche (111) ausgelegt ist.

10. Klemmvorrichtung nach Anspruch 8 oder 9,
bei der das Fixierelement (103) zum Übertragen einer Richtung der Klemmkraft in senkrechter Richtung in Bezug zur Trägerfläche (111) ausgelegt ist.

11. Trägereinheit mit der Klemmvorrichtung (100) nach einem der Ansprüche 1 bis 10,
bei der es sich bei der Trägereinheit (108) um eine Transporteinheit handelt, die aus der Gruppe ausgewählt ist, welche aus Schiffen, Schienenfahrzeugen, Lastkraftwagen und Flugzeugen besteht.

12. Verfahren zum Befestigen eines Halteelements (105), insbesondere eines Halteelements (105) für ein Windturbinenelement, an einer Trägereinheit (108), wobei das Verfahren Folgendes umfasst:
Fixieren eines Befestigungselements (101) an einer Trägereinheit (108),
Festklemmen des Halteelements (105) am Befestigungselement (101) durch ein Klemmelement (102), Bereitstellen einer Klemmkraft für das Klemmelement (102) durch ein Fixierelement (103), das durch das Klemmelement (102) und das Befestigungselement (101) geführt ist,
Bereitstellen der Klemmkraft durch derartiges Drücken des Klemmelements (102) in Richtung des Befestigungselements (101), dass das Halteelement (105) zwischen das Klemmelement (102) und das Befestigungselement (101) geklemmt wird, und
flexibles Fixieren des Fixierelements (103) an mindestens einem flexiblen Fixierabschnitt (104) am Befestigungselement (101).

## Revendications

1. Dispositif de serrage pour monter un élément de maintien (105), en particulier un élément de maintien (105) pour un élément d'éolienne, sur une unité de support (108), le dispositif de serrage (100) comprenant :
un élément de serrage (102) ;
un élément de fixation (103) ; et
un élément de montage (101) avec au moins une partie de fixation (104) flexible ;
dans lequel l'élément de montage (101) est adapté à être fixé à l'unité de support (108) ;
dans lequel l'élément de serrage (102) est adapté à serrer l'élément de maintien (105) sur l'élément de montage (101) ;
dans lequel l'élément de fixation (103) est guidé à travers l'élément de serrage (102) et l'élément de montage (101),
dans lequel l'élément de fixation (103) est adapté à délivrer une force de serrage en pressant l'élément de serrage (102) dans le sens de l'élément de montage (101), de telle sorte que l'élément de maintien (105) est serré entre l'élément de serrage (102) et l'élément de montage (101), de telle sorte qu'un frottement statique entre l'élément de maintien (105) et l'élément de montage (101) est délivré ; et
dans lequel l'élément de fixation (103) est adapté à être fixé de façon flexible à l'au moins une partie de fixation (104) flexible de l'élément de montage (101).

2. Dispositif de serrage selon la revendication 1, comprenant en outre :
un élément d'espacement (106) ;
dans lequel l'élément d'espacement (106) est adapté à espacer l'élément de serrage (102) de l'élément de montage (101) et l'élément d'espacement (106) est adapté à transmettre au moins une partie de la force de serrage à l'élément de montage (101).

3. Dispositif de serrage selon la revendication 2,
dans lequel l'élément d'espacement (106) et l'élément de serrage (102) sont formés de façon intégrale.

4. Dispositif de serrage selon la revendication 2,
dans lequel l'élément d'espacement (106) comprend un élément à vis ;
dans lequel l'élément à vis est adapté à ajuster un espacement entre l'élément de serrage (102) et l'élément de montage (101) .

5. Dispositif de serrage selon l'une des revendications 1 à 4,
dans lequel l'au moins une partie de fixation (104) flexible comprend un trou allongé.

6. Dispositif de serrage selon l'une des revendications 1 à 5,
dans lequel l'élément de montage (101) comprend au moins un élément d'alignement (112) ;
dans lequel l'au moins un élément d'alignement (112) est adapté à aligner l'élément de maintien (105) sur l'élément de montage (101) .

7. Dispositif de serrage selon l'une des revendications 1 à 6,
dans lequel l'élément de montage (101) comprend au moins une fixation (109) d'unité de support ;
dans lequel l'au moins une fixation (109) d'unité de support est adaptée à fixer l'élément de montage (101) à l'unité de support (108).

8. Dispositif de serrage selon l'une des revendications 1 à 7,
dans lequel l'élément de montage (101) comprend une zone de base (110) ;
dans lequel la zone de base (110) est adaptée à être montée sur une zone de support (111) de l'unité de support (108) .

9. Dispositif de serrage selon la revendication 8,
dans lequel l'élément de fixation (103) est adapté à transmettre un sens de la force de serrage dans un sens parallèle par rapport à la zone de support (111).

10. Dispositif de serrage selon la revendication 8 ou 9,
dans lequel l'élément de fixation (103) est adapté à transmettre un sens de la force de serrage dans un sens perpendiculaire par rapport à la zone de support (111).

11. Unité de support comprenant le dispositif (100) de serrage selon l'une des revendications 1 à 10,
dans lequel l'unité de support (108) est une unité de transport choisie parmi une du groupe consistant en des navires, des véhicules de chemin de fer, des camions et des avions.

12. Procédé de montage d'un élément de maintien (105), en particulier d'un élément de maintien (105) pour un élément d'éolienne, sur une unité de support (108), le procédé comprenant :
la fixation d'un élément de montage (101) sur une unité de support (108) ;
le serrage de l'élément de maintien (105) sur l'élément de montage (101) par un élément de serrage (102) ;
la délivrance d'une force de serrage à l'élément de serrage (102) par un élément de fixation (103) qui est guidé à travers l'élément de serrage (102) et l'élément de montage (101) ;
la délivrance d'une force de serrage en pressant l'élément de serrage (102) dans le sens de l'élément de montage (101), de telle sorte que l'élément de maintien (105) est serré entre l'élément de serrage (102) et l'élément de montage (101) ; et
la fixation flexible de l'élément de fixation (103) à au moins un partie de fixation (104) flexible sur l'élément de montage (101) .
